(19) Europäisches Patentamt
European Patent Office
Office européen des brevets

(11) Veröffentlichungsnummer: **0 554 696 A2**

(12) # EUROPÄISCHE PATENTANMELDUNG

(21) Anmeldenummer: **93100631.6**

(22) Anmeldetag: **16.01.93**

(51) Int. Cl.5: **C09B 67/22**, C09B 57/14, D06P 1/16, D06P 3/54

(30) Priorität: **01.02.92 DE 4202911**

(43) Veröffentlichungstag der Anmeldung: **11.08.93 Patentblatt 93/32**

(84) Benannte Vertragsstaaten: **BE CH DE ES FR GB GR IT LI**

(71) Anmelder: **HOECHST MITSUBISHI KASEI CO., LTD.**
**10-33, Akasaka 4-chome**
**Minato-ku, Tokyo(JP)**

(72) Erfinder: **Bühler, Ulrich, Dr.**
**Kastanienweg 8**
**W-8755 Alzenau(DE)**
Erfinder: **Kruse, Hubert**
**Hölderlinstrasse 12**
**W-6240 Königstein(DE)**
Erfinder: **Dietz, Erwin, Dr.**
**St.-Matthäus-Strasse 7**
**W-6233 Kelkheim 3(DE)**

(74) Vertreter: **Urbach, Hans-Georg, Dr. et al**
**CASSELLA AKTIENGESELLSCHAFT,**
**Patentabteilung, Hanauer Landstrasse 526**
**W-6000 Frankfurt am Main 60 (DE)**

(54) **Farbstoffmischungen zum Färben von textilen hydrophoben Fasermaterialien.**

(57) Die vorliegende Erfindung betrifft Mischungen von Farbstoffen der allgemeinen Formel I

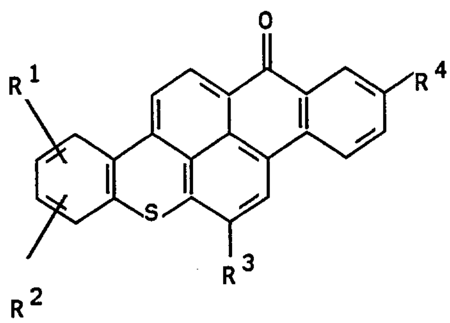

I

worin
$R^1$ Wasserstoff, Halogen, $(C_1-C_4)$-Alkyl oder $(C_1-C_4)$-Alkoxy;
$R^2$ Wasserstoff, Halogen, Cyan, $(C_1-C_4)$-Alkyl, $(C_1-C_4)$-Alkoxy, $(C_1-C_4)$-Alkoxycarbonyl, $(C_1-C_4)$-Alkylcarbonyloxy oder Phenyl, das gegebenenfalls substituiert sein kann;
$R^3$ Wasserstoff, $(C_1-C_4)$-Alkyl, $(C_1-C_4)$-Alkoxy oder Phenyl, das gegebenenfalls substituiert sein kann; und
$R^4$ Wasserstoff, Halogen, $(C_1-C_4)$-Alkoxy, Phenylthio oder Phenoxy, die gegebenenfalls substituiert sein können, bedeuten, Verfahren zu ihrer Herstellung sowie die Verwendung der Farbstoffe der allgemeinen Formel I und ihrer Mischungen untereinander zum Färben und Bedrucken von textilen hydrophoben synthetischen Fasermaterialien und deren Mischungen mit natürlichen Faserstoffen.

EP 0 554 696 A2

Die vorliegende Erfindung betrifft Mischungen von Benzothioxanthenfarbstoffen, Verfahren zu ihrer Herstellung sowie die Verwendung von Benzothioxanthenfarbstoffen und ihrer Mischungen untereinander zum Färben und Bedrucken von textilen hydrophoben synthetischen Fasermaterialien und deren Mischungen mit natürlichen Faserstoffen.

Benzothioxanthenfarbstoffe sind als Fluoreszenzpigmente zum Färben von Kunststoffmaterialien, wie beispielsweise Polymethacrylaten, Polyvinylchloriden, Polyolefinen, Polycarbonaten, Polystyrolen, Copolymeren aus Acrylnitril, Butadien und Styrol oder auch Polyestern, bekannt. Sie sind z.B. beschrieben in FR 2.124.384, DE-A 26 13 493, DE-A 28 15 031, IT 1.061.813 sowie in Dyes and Pigments 3, 59 (1982). Ihre Herstellung ist in DE-B 21 34 517 und DE-B 21 34 518 beschrieben.

In der DE-B 21 34 518 wird zwar darauf hingewiesen, daß Verbindungen mit Benzothioxanthengerüst als Dispersionsfarbstoffe, d.h. als Farbstoffe, die für das Färben in einer Dispersion vorliegen müssen, bekannt seien. Gemäß diesem Stand der Technik werden aber Benzothioxanthenfarbstoffe lediglich zum Massefärben von Polymeren eingesetzt. Im Falle von Polyester können sie, wenn sie entsprechend substituiert sind, auch einkondensiert werden und bilden dann eine chemische Bindung zum Polymeren aus.

Es wurde nun überraschenderweise gefunden, daß sich Benzothioxanthenfarbstoffe und insbesondere ihre Mischungen untereinander auch zum Färben und Bedrucken von textilen hydrophoben Fasermaterialien, insbesondere von Polyester-materialien und deren Mischungen mit natürlichen Fasermaterialien aus wäßrigem Färbebad bzw. aus der Druckpaste eignen.

Die vorliegende Erfindung betrifft Mischungen von Farbstoffen der allgemeinen Formel I

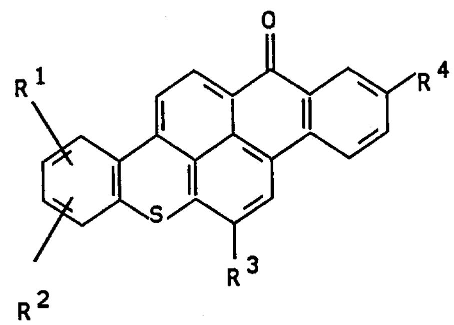

I

worin

$R^1$ Wasserstoff, Halogen, $(C_1-C_4)$-Alkyl oder $(C_1-C_4)$-Alkoxy;

$R^2$ Wasserstoff, Halogen, Cyan, $(C_1-C_4)$-Alkyl, $(C_1-C_4)$-Alkoxy, $(C_1-C_4)$-Alkoxycarbonyl, $(C_1-C_4)$-Alkylcarbonyloxy oder Phenyl, das gegebenenfalls substituiert sein kann;

$R^3$ Wasserstoff, $(C_1-C_4)$-Alkyl, $(C_1-C_4)$-Alkoxy oder Phenyl, das gegebenenfalls substituiert sein kann; und

$R^4$ Wasserstoff, Halogen, $(C_1-C_4)$-Alkoxy, Phenylthio oder Phenoxy, die gegebenenfalls substituiert sein können, bedeuten.

Bevorzugte Mischungskomponenten der allgemeinen Formel I sind solche der allgemeinen Formel Ia

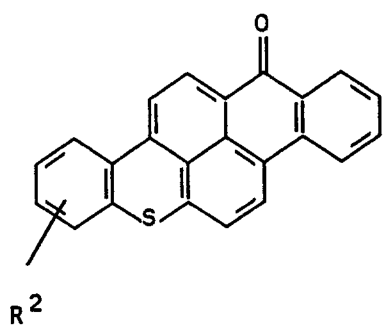

Ia

worin

$R^2$ Halogen, Cyan, $(C_1-C_4)$-Alkyl, $(C_1-C_4)$-Alkoxy oder $(C_1-C_4)$-Alkoxycarbonyl bedeutet;

solche der allgemeinen Formel Ib

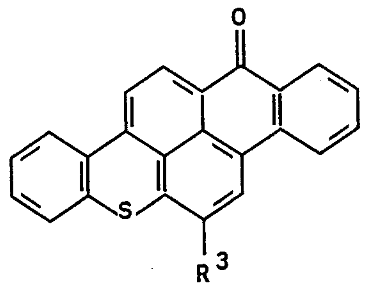

Ib

worin
$R^3$ ($C_1$-$C_4$)-Alkyl, ($C_1$-$C_4$)-Alkoxy oder Phenyl bedeutet;
solche der allgemeinen Formel Ic

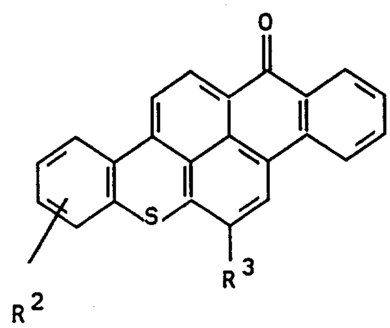

Ic

worin
$R^2$ Halogen, Cyan, ($C_1$-$C_4$)-Alkyl, ($C_1$-$C_4$)-Alkoxy oder ($C_1$-$C_4$)-Alkoxycarbonyl und
$R^3$ ($C_1$-$C_4$)-Alkoxy
bedeuten;
sowie solche der allgemeinen Formel Id

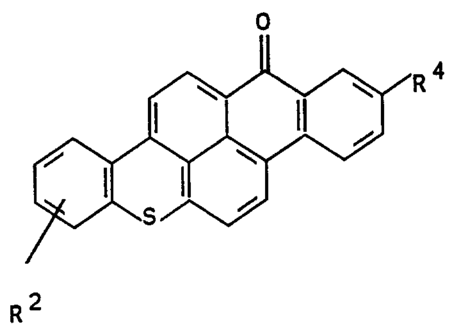

Id

worin
$R^2$ Halogen, Cyan, ($C_1$-$C_4$)-Alkyl, ($C_1$-$C_4$)-Alkoxy oder ($C_1$-$C_4$)-Alkoxycarbonyl und
$R^4$ Halogen, ($C_1$-$C_4$)-Alkoxy, Phenylthio oder Phenoxy, die gegebenenfalls substituiert sein können,
bedeuten.

Besonders bevorzugte Mischungskomponenten der allgemeinen Formel I sind solche der allgemeinen Formel Ie

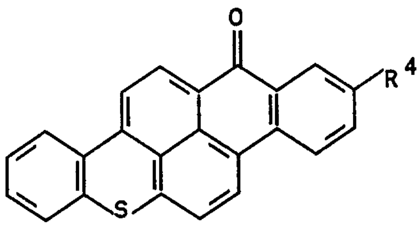

Ie

worin
$R^4$ ($C_1$-$C_4$)-Alkoxy, Phenylthio oder Phenoxy, die gegebenenfalls substituiert sein können, bedeutet, wobei Phenylthio bevorzugt ist;
sowie die Verbindung der Formel If

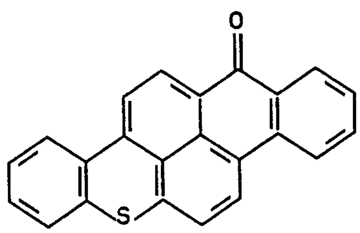

If

Für $R^1$, $R^2$ oder $R^4$ stehendes Halogen ist beispielsweise Fluor, Chlor oder Brom, wobei Chlor und Brom bevorzugt sind.

Für $R^1$, $R^2$ oder $R^3$ stehendes ($C_1$-$C_4$)-Alkyl ist beispielsweise Methyl, Ethyl, n-Propyl, i-Propyl, n-Butyl, sek-Butyl und i-Butyl, wobei Methyl bevorzugt ist.

Für $R^1$, $R^2$, $R^3$ oder $R^4$ stehendes ($C_1$-$C_4$)-Alkoxy ist beispielsweise Methoxy, Ethoxy, n-Propoxy, i-Propoxy, n-Butoxy, sek-Butoxy und i-Butoxy, wobei Methoxy bevorzugt ist. Analoges gilt für ($C_1$-$C_4$)-Alkoxycarbonyl, das für $R^2$ steht.

Für $R^2$ stehendes ($C_1$-$C_4$)-Alkylcarbonyloxy ist beispielsweise Acetyloxy, Propionyloxy, n-Butyryloxy und i-Butyryloxy.

Für $R^2$ oder $R^3$ stehendes Phenyl kann beispielsweise durch Methyl, Methoxy oder Chlor zweifach oder bevorzugt einfach substituiert sein.

Für $R^4$ stehendes Phenylthio oder Phenoxy kann beispielsweise durch Methyl, Methoxy oder Chlor substituiert sein.

Bevorzugte erfindungsgemäße Mischungen sind solche, die einen oder mehrere Farbstoffe der allgemeinen Formeln Ia und/oder Ib und/oder Ic und/oder Id enthalten, insbesondere, wenn deren Alkyl-, Alkoxy- und Halogenreste bevorzugte Bedeutungen haben.

Besonders bevorzugte erfindungsgemäße Mischungen sind solche, die einen oder mehrere Farbstoffe der allgemeinen Formeln Ie und/oder die Verbindung der Formel If enthalten.

Die erfindungsgemäßen Mischungen enthalten bevorzugt drei oder mehr Mischungskomponenten der allgemeinen Formel I. Besonders bevorzugt enthalten sie aber nur zwei Mischungskomponenten der allgemeinen Formel I. In den erfindungsgemäßen Farbstoffmischungen kann das Verhältnis der verschiedenen Farbstoffe der allgemeinen Formel I in relativ weiten Grenzen veriieren. Im allgemeinen beträgt der Mindestgewichtsanteil einer Komponente 10 % und der maximale Gewichtsanteil 90 %. Bei Farbstoffmischungen, die nur aus zwei Farbstoffen der allgemeinen Formel I bestehen, ist ein Mengenverhältnis von 70/30 bis 30/70 bevorzugt, d.h. der Gewichtsanteil eines Farbstoffs beträgt 30 bis 70 %.

Die vorliegende Erfindung betrifft auch die Verwendung sowohl der erfindungsgemäßen Farbstoffmischungen, als auch der Farbstoffe der allgemeinen Formel I alleine zum Färben und Bedrucken von textilen hydrophoben synthetischen Fasermaterialien und deren Mischungen mit natürlichen Faserstoffen. Die oben als bevorzugte bzw. besonders bevorzugte Mischungskomponenten genannten Farbstoffe der allgemeinen Formel I sind auch für die erfindungsgemäße Verwendung bevorzugt bzw. besonders bevorzugt.

Die erfindungsgemäßen Farbstoffmischungen bzw. die Farbstoffe der allgemeinen Formel I werden vor dem Färben formiert, d.h. sie werden in Gegenwart von Wasser und von Dispergiermitteln in geeigneten Mühlen, wie z.B. Kugel- oder Sandmühlen, gemahlen und, wenn eine pulverförmige Farbstoff-Formierung

hergestellt werden soll, anschliessend sprühgetrocknet.

Geeignete Dispergiermittel sind z.B. anionische oder nichtionische Dispergiermittel, die auch gemeinsam eingesetzt werden können.

Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkylaryl-sulfonate, sowie Alkyl-aryl-polyglykolethersulfate.

Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an $C_8$-$C_{10}$-Alkylphenole.

Die Mahlung erfolgt bei Temperaturen zwischen 10 und 90°C, vorzugsweise bei 30 bis 60°C. Bei der gemeinsamen Formierung getrennt hergestellter Einzelkomponenten ist die gemeinsame Mahlung bei Temperaturen über 30°C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 $\mu$, vorzugsweise bei etwa 1 $\mu$.

Die erfindungsgemäßen Farbstoffmischungen können nach verschiedenen Verfahren hergestellt werden, z.B. durch Mischen der getrennt hergestellten Einzelfarbstoffe, wobei bevorzugt bereits formierte Einzelfarbstoffe gemischt werden. Dieser Mischprozeß erfolgt in geeigneten Mischern, wie z.B. Taumelmischern oder Rührwerken. Getrennt formierte Einzelfarbstoffe können aber auch durch Einrühren in Färbeflotten gemischt werden.

Erfindungsgemäße Farbstoffmischungen können weiterhin durch gemeinsame Formierung der getrennt hergestellten Mischungskomponenten, d.h. durch gemeinsame Mahlung und/oder Sprühtrocknung, hergestellt werden. Der gemeinsame Mahlprozeß kann dabei auch trocken in Gegenwart von Salzen oder aber in Gegenwart von Lösungsmitteln, gegebenenfalls bei erhöhter Temperatur, in Schwing-, Kugel- oder Perlmühlen stattfinden.

Bevorzugt werden die erfindungsgemäßen Farbstoffmischungen in einer thermischen Behandlung hergestellt, die dadurch gekennzeichnet ist, daß man die Einzelfarbstoffe der allgemeinen Formel I gemeinsam, gegebenenfalls unter Druck, in Wasser eine halbe bis mehrere Stunden auf Temperaturen von 50 bis 150°C, vorzugsweise 90 bis 130°C, erhitzt und wieder abkühlt. Dieses Erhitzen erfolgt vorteilhaft in Gegenwart eines oder mehrerer Dispergiermittel oder eines organischen Lösungsmittels. Solche Lösungsmittel sind z.B. Methanol, Ethanol, Dimethylformamid oder Dimethylsulfoxid, vorzugsweise jedoch in Wasser wenig lösliche Lösungsmittel wie Toluol, Chlorbenzol, 1.2-Dichlorbenzol oder Butylacetat. Diese Lösungsmittel können nach der thermischen Behandlung wieder abdestilliert werden. Sie können aber auch durch Filtration und anschließendes Waschen der Mischung mit Wasser abgetrennt werden. An dieses Herstellungsverfahren kann sich dann die Formierung der Mischung anschließen.

Besonders bevorzugt werden die erfindungsgemäßen Farbstoffmischungen durch gemeinsames Lösen der Einzelfarbstoffe der allgemeinen Formel I in einem organischen Lösungsmittel, Lösungsmittelgemisch oder einer Mineralsäure mit anschließendem Auskristallisieren und/oder Ausfällen, Isolieren, z.B. durch Filtration und Abtrennen von Lösungsmittelresten, z.B. durch Waschen hergestellt. Auch hier kann sich die Formierung der Mischung anschließen.

Bevorzugte organische Lösungsmittel sind dabei polare protische Lösungsmittel, wie Dimethylformamid, Dimethylsulfoxid oder N-Methylpyrrolidon. Es ist dabei vorteilhaft, die Mischungskomponente vollständig in Lösung zu bringen. Bei schwerer löslichen Mischungskomponenten kann das durch Erhöhung der Lösungsmittelmenge, der Lösetemperatur bzw. der Lösedauer erreicht werden. Um Lösungsmittelmengen einzusparen wird vorteilhaft bei erhöhter Temperatur gelöst und es kann bei Temperaturen bis hin zur Siedetemperatur des jeweiligen Lösungsmittels gearbeitet werden. Gegebenenfalls kann unter Druck die Temperatur auch darüber hinaus angehoben werden.

Mineralsäuren, die als Lösemittel verwendet werden können, sind beispielsweise Trifluoressigsäure, Flußsäure, Polyphosphorsäure und insbesondere Schwefelsäure.

Der Schwefeldioxid- und der Wassergehalt der Schwefelsäure sollte dabei so gewählt werden, daß auf der einen Seite keine Sulfierung der Farbstoffe stattfindet und sich auf der anderen Seite die Farbstoffe noch gut lösen.

Ein weiteres besonders bevorzugtes Herstellungsverfahren ist das gemeinsame Umküpen der Einzelfarbstoffe der allgemeinen Formel I.

Für gewisse Anwendungsgebiete werden Pulvereinstellungen bevorzugt. Diese Pulver enthalten den Farbstoff, Dispergiermittel und andere Hilfsmittel, wie z.B. Netz-, Oxydations-, Konservierungs-und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Die Farbstoffgehalte der flüssigen Farbstoffeinstellungen liegen bei 20 bis 40 %, die Dispergiermittelgehalte bei ca. 20 bis 40 %. Bei Pulvereinstellungen liegen die Farbstoffgehalte bei 20 bis 60 % und die Dispergiermittelgehalte bei 40 bis 80 %. Aus ökonomischen Gründen wird ein Farbstoffgehalt von 20 % meist nicht unterschritten.

Die erfindungsgemäß einzusetzenden Farbstoffe der allgemeinen Formel I und die erfindungsgemäßen Farbstoffmischungen sind als solche oder auch im Gemisch mit anderen Dispersionsfarbstoffen vorzüglich zum Färben und Bedrucken von textilen hydrophoben synthetischen Fasermaterialien und deren Mischungen mit natürlichen Faserstoffen geeignet.

Als hydrophobe synthetische Materialien kommen z.B. in Betracht: Cellulose-2 1/2-Acetat, Cellulosetriacetat, Polyamide und besonders Polyester, wie z.B. Polyethylenglykolterephthalat. Natürliche Faserstoffe sind z.B. Baumwollen, regenerierte Cellulosefasern oder Wolle.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein.

Das Färben des genannten Fasergutes mit dem erfindungsgemäßen Farbstoff kann in an sich bekannter Weise erfolgen, vorzugsweise aus wäßriger Suspension, gegebenenfalls in Gegenwart von Carriern, zwischen 90 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird. Besonders geeignet sind die erfindungsgemäßen Mischungen sowie die Farbstoffe der allgemeinen Formel I zum HT-Färben von Polyester und polyesterhaltigen Textilmaterialien im pH-Bereich von 8 bis 12.

Das Bedrucken der genannten Materialien kann in an sich bekannter Weise so durchgeführt werden, daß der erfindungsgemäße Farbstoff in eine Druckpaste einverleibt wird und die damit bedruckte Ware zur Fixierung des Farbstoffs, gegebenenfalls in Gegenwart eines Carriers, bei Temperaturen zwischen 90 und 230°C mit HT-Dampf, Druckdampf oder Trockenhitze behandelt wird.

Man erhält auf diese Weise sehr farbstarke brillante orangefarbene bis blaustichig rote Färbungen oder Drucke von sehr hoher Brillanz mit sehr guten Echtheitseigenschaften, insbesondere einer sehr hohen Lichtechtheit. In den bei den obigen Applikationen eingesetzten Färbe- und Klotzflotten sowie Druckpasten soll der erfindungsgemäße Farbstoff in möglichst feiner Verteilung vorliegen. Die Feinverteilung des Farbstoffs erfolgt in an sich bekannter Weise dadurch, daß man den formierten Farbstoff gegebenenfalls zusammen mit Färbereihilfsmitteln wie z.B. Egalisierhilfsmitteln in die Färbe- bzw. Klotzflotte einrührt. Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netzund Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5 eingestellt. Es ist vorteilhaft, den eingestellten pH-Wert abzupuffern und eine ausreichende Menge eines Puffersystems zuzusetzen. Ein vorteilhaftes Puffersystem ist z.B. das System Essigsäure/Natriumacetat.

Soll der Farbstoff für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Für die Verwendung der Farbstoffe der Formel I und ihrer Mischungen untereinander zum Färben von Polyester oder polyesterhaltigen Textilmaterialien im wäßrigen Färbebad bei pH-Werten zwischen 8 und 12 wird der erforderliche pH-Wert der Färbeflotte vor bzw. auch während des Färbens durch Zugabe von Basen wie Alkylihydroxiden, z.B. wäßriger Natronlauge, Alkalihydrogencarbonaten, z.B. Natriumhydrogencarbonat oder Alkalicarbonaten z.B. Soda, eingestellt. Ein bevorzugter pH-Wert ist pH 9 bis 10.

Um pH-Schwankungen zu minimieren, werden vorzugsweise Puffersubstanzen zugesetzt, wie sie z.B. in JSDC, 77 (1979) S. 47 oder JSDC 79 (1981), S. 115, beschrieben sind. Besonders geeignete Puffersubstanzen sind solche, die im pH-Bereich zwischen 9 und 11 die größte Pufferwirkung besitzen. Geeignete

Puffersysteme sind z.B. Essigsäure/Natriumpyrophosphat, Borsäure/Borax, Natriumdihydrogenphosphat/Dinatriumhydrogenphosphat, Phosphorsäure/Bernsteinsäure/Borsäure oder Kombinationen organischer Phosphorverbindungen mit Polycarbonsäuren. Die Einsatzmengen an Puffersystem liegen vorzugsweise zwischen 0,5 und 10 g/l.

Die Erfindung wird durch die folgenden Beispiele erläutert:

Beispiel 1

20 g des Farbstoffs der Formel Ig

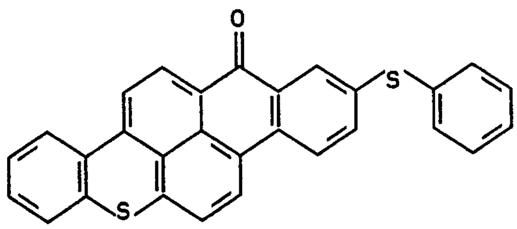

Ig

und 20 g des Farbstoffs der Formel If

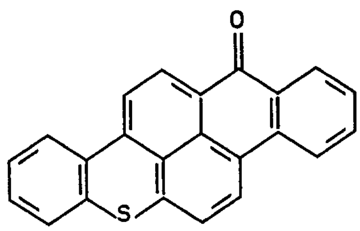

If

werden in 1,2 l N-Methylpyrrolidon 1 Stunde bei 115°C gerührt, auf 50°C abgekühlt, auf 8 l Wasser gefällt. Anschließend wird die Suspension auf 80°C erwärmt, filtriert, mit Wasser gewaschen und getrocknet. Man erhält 38,2 g Farbstoffmischung.

0,3 g der so erhaltenen Farbstoffmischung werden in feindispergierter Form in 2000 g Wasser eingerührt. Die Dispersion wird mit Essigsäure und Natriumacetat auf einen pH-Wert von 4,5 eingestellt und mit 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalat ein und färbt 45 Minuten bei 130°C. Nach anschließendem Spülen, reduktiver Nachbehanddlung mit einer 0,2 %igen Natriumdithionitlösung während 15 Minuten bei 70 bis 80°C, Spülen und Trocknen, erhält man eine brillante rote Färbung mit sehr guten coloristischen Echtheiten, insbesondere einer sehr guten Lichtechtheit.

Beispiel 2

Je 7,5 g der in Beispiel 1 eingesetzten Farbstoffe werden in 250 ml Wasser mit 45 g eines Natriumligninsulfonates und 10 g eines nichtionogenen Dispergiermittels auf Basis Arylpolyglykolether angeschlagen, mit Essigsäure auf pH 6 gestellt und nach Homogenisieren mit einem Zackenrührer im Autoklav 2 Stunden auf 100°C erhitzt. Danach wird die Mischung abgekühlt, nach Zusatz von 30 g eines Kondensationsproduktes aus Kresol, Formaldehyd und Naphthol-2-sulfonsäure Natriumsalz bis zu einer Feinverteilung von 80 % ≦ 1 µ gemahlen, gesiebt und sprühgetrocknet.

Werden 2 g des so erhaltenen Pulvers auf Polyester so gefärbt, wie es in Beispiel 1 beschrieben ist, so erhält man ebenfalls eine brillante rote Färbung mit hervorragenden coloristischen Echtheiten.

Beispiel 3

20 g des Farbstoffs der Formel Ig werden in 150 ml Wasser in Gegenwart von 30 g Natriumligninsulfonat in einer Sandmühle bis zu einer Feinverteilung von 80 % < 1 $\mu$ gemahlen und gesiebt. 150 g der so erhaltenen Dispersion werden 1000 g einer Druckpaste, die 45 g Johannisbrotkernmehl, 6 g 3-nitrobenzolsulfonsaures Natrium und 3 g Zitronensäure auf 100 g enthält, einverleibt. Wird ein Polyestergewebe mit dieser Druckpaste bedruckt, das bedruckte Gewebe nach dem Trocknen 15 Minuten bei 1,5 atü Dampfdruck gedämpft, geseift und getrocknet, so erhält man einen brillanten blaustichig roten Druck mit hervorragenden coloristischen Echtheiten.

Beispiel 4

2 g der nach den Angaben des Beispiels 3 hergestellten Flüssigpräparation werden in einem Färbeautoklaven in einer Färbeflotte, bestehend aus 2 l Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 Minuten bei 130°C auf 100 g eines Gewebes aus Polyethylenterephthalat gefärbt, nachdem vorher der pH-Wert der Färbeflotte mit wäßriger Natronlauge auf 9,5 gestellt wurde. Danach wird die Färbung gespült, reduktiv gereinigt, sowie gespült und getrocknet. Man erhält so eine brillante gelbstichig rote Färbung. Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung dient bei einem Vergleich mit der pH 9,5 Färbung als Bezug: beide Färbungen sind praktisch farbtongleich, der Farbstoff hat sich bei pH 9,5 praktisch nicht zersetzt.

In der nachstehenden Tabelle sind weitere erfindungsgemäße Mischungen und erfindungsgemäß einzusetzende Farbstoffe angegeben, die auf Polyester ebenfalls brillante rote Färbungen und Drucke mit ebenfalls sehr guten coloristischen Eigenschaften liefern.

Abkürzungen:

1 = brillantes blaustichiges Rot
2 = brillantes Rot
3 = brillantes gelbstichiges Rot

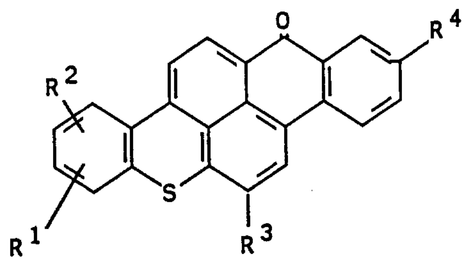

| $R^1$ | $R^2$ | $R^3$ | $R^4$ | Mischungs-verhältnis | Farbton auf PES |
|---|---|---|---|---|---|
| H | H | H | H | 30 | 1 - 2 |
| H | H | H | $SC_6H_5$ | 70 | |
| H | H | H | H | 80 | 2 - 3 |
| H | H | H | $SC_6H_5$ | 20 | |
| H | H | H | $S(4-Cl-)C_6H_4$ | 40 | 2 |
| H | H | H | H | 60 | |
| H | H | H | $S(3.5-Di-CH_3)C_6H_3$ | 65 | 1 |
| H | H | H | H | 35 | |
| $3-CH_3$ | H | H | $S(3.5-Di-CH_3)C_6H_3$ | 50 | 1 - 2 |
| H | H | H | H | 50 | |
| H | H | H | $SC_6H_5$ | 90 | 1 |
| $3-OCH_3$ | H | H | H | 10 | |
| H | H | H | $SC_6H_5$ | 55 | 2 |
| H | H | H | Br | 45 | |
| H | H | H | $SC_6H_5$ | 5 | 3 |
| H | H | $CH_3$ | H | 95 | |
| H | H | H | $SC_6H_5$ | 30 | 2 |
| $3-CH_3$ | H | H | H | 70 | |
| H | H | H | $SC_6H_5$ | 95 | 1 |
| $2-CH_3$ | H | H | H | 5 | |
| H | H | H | $SC_6H_5$ | 50 | 2 |
| 3-Cl | H | H | H | 50 | |
| H | H | H | $SC_6H_5$ | 65 | 1 - 2 |
| 2-Cl | $4-CH_3$ | H | H | 35 | |
| H | H | H | $S(4-CH_3-)C_6H_4$ | 20 | 2 |
| $3-OCH_3$ | H | H | H | 80 | |

| $R^1$ | $R^2$ | $R^3$ | $R^4$ | Mischungsverhältnis | Farbton auf PES |
|---|---|---|---|---|---|
| H | H | H | $S(4\text{-}OCH_3\text{-})C_6H_4$ | 99 | 1 |
| $3\text{-}C_2H_5$ | H | H | H | 1 | |
| H | H | H | $SC_6H_5$ | 67 | 1 |
| H | H | H | $S(3.5\text{-}Di\text{-}CH_3\text{-})C_6H_3$ | 33 | |
| H | H | H | $SC_6H_5$ | 80 | 1 |
| H | H | H | $S(4\text{-}Cl\text{-})C_6H_4$ | 20 | |
| $3\text{-}CH_3$ | H | H | $SC_6H_5$ | 15 | 1 |
| H | H | H | $S(3\text{-}CH_3\text{-})C_6H_4$ | 85 | |
| H | H | H | H | 70 | 3 |
| H | H | $OCH_3$ | H | 30 | |
| H | H | H | H | 30 | 2 - 3 |
| H | H | $OnC_4H_9$ | H | 70 | |
| H | H | H | H | 50 | 3 |
| H | H | $CH_3$ | H | 50 | |
| H | H | H | H | 90 | 2 - 3 |
| $2\text{-}CH_3$ | H | $OCH_3$ | H | 10 | |
| H | H | H | H | 33 | 3 |
| $3\text{-}CH_3$ | H | H | H | 67 | |
| H | H | H | H | 85 | 3 |
| H | H | $C_6H_5$ | H | 15 | |
| H | H | H | H | 20 | 2 - 3 |
| $3\text{-}OC_2H_5$ | H | H | H | 80 | |
| H | H | H | H | 30 | 2 |
| $2\text{-}OC_2H_5$ | H | $OCH_3$ | H | 70 | |
| H | H | H | H | 30 | 3 |
| 3-Cl | H | H | H | 70 | |
| H | H | H | H | 60 | 3 |
| $2\text{-}CH_3$ | $3\text{-}CH_3$ | H | H | 40 | |
| H | H | H | H | 50 | 3 |
| 2-Cl | $4\text{-}CH_3$ | $OCH_3$ | H | 50 | |
| $2\text{-}CH_3$ | H | H | H | 95 | 3 |
| $3\text{-}CH_3$ | H | H | H | 5 | |

| $R^1$ | $R^2$ | $R^3$ | $R^4$ | Mischungs-verhältnis | Farbton auf PES |
|---|---|---|---|---|---|
| 3-$CH_3$ | H | H | H | 45 | 3 |
| H | H | $CH_3$ | H | 55 | |
| H | H | H | $OC_6H_5$ | 30 | 2 - 3 |
| H | H | H | H | 70 | |
| H | H | H | O(4-Cl-)$C_6H_4$ | 10 | 3 |
| H | H | H | H | 90 | |
| H | H | H | O(4-$CH_3$-)$C_6H_4$ | 80 | 2 |
| H | H | H | H | 20 | |
| H | H | H | O(2-Cl-4-$CH_3$-)$C_6H_3$ | 30 | 2 - 3 |
| H | H | H | H | 70 | |
| H | H | H | $OC_6H_5$ | 50 | 2 - 3 |
| 3-$CH_3$ | H | H | H | 50 | |
| H | H | H | O(2-$CH_3$-)$C_6H_4$ | 10 | 2 - 3 |
| H | H | $OCH_3$ | H | 90 | |
| 3-$CH_3$ | H | H | $OC_6H_5$ | 20 | 2 - 3 |
| H | H | H | H | 80 | |
| H | H | H | $SC_6H_5$ | 70 | 1 - 2 |
| H | H | H | $OC_6H_5$ | 30 | |
| H | H | H | $SC_6H_5$ | 80 | 1 - 2 |
| H | H | H | Br | 20 | |
| H | H | H | $OC_6H_5$ | 90 | 2 |
| H | H | H | Br | 10 | |
| H | H | H | $OC_6H_5$ | 50 | 2 |
| 2-$OC_2H_5$ | H | H | H | 50 | |
| H | H | H | $OCH_3$ | 30 | 2 - 3 |
| H | H | H | H | 70 | |
| H | H | H | $OCH_3$ | 50 | 2 |
| 2-$OCH_3$ | H | H | H | 50 | |
| H | H | H | $OC_2H_5$ | 60 | 2 |
| H | H | H | Br | 40 | |
| H | H | H | $OnC_4H_9$ | 90 | 2 |
| H | H | H | H | 10 | |

| $R^1$ | $R^2$ | $R^3$ | $R^4$ | Mischungsverhältnis | Farbton auf PES |
|---|---|---|---|---|---|
| H | H | H | $OC_2H_5$ | 45 | 1 - 2 |
| H | H | H | $OC_6H_5$ | 55 | |
| H | H | H | $OCH_3$ | 10 | 1 - 2 |
| H | H | H | $SC_6H_5$ | 90 | |
| H | H | H | H | 80 | |
| 2-$CH_3$ | H | H | H | 10 | 2 - 3 |
| H | H | H | Br | 10 | |
| H | H | H | $OC_6H_5$ | 30 | |
| H | H | H | $SC_6H_5$ | 30 | 1 |
| H | H | H | $OCH_3$ | 40 | |
| H | H | H | $OC_6H_5$ | 40 | |
| H | H | H | $OC_2H_5$ | 40 | 2 |
| H | H | H | Br | 20 | |
| H | H | H | H | 8 | |
| H | H | $OCH_3$ | H | 90 | 2 - 3 |
| H | H | H | $OCH_3$ | 2 | |

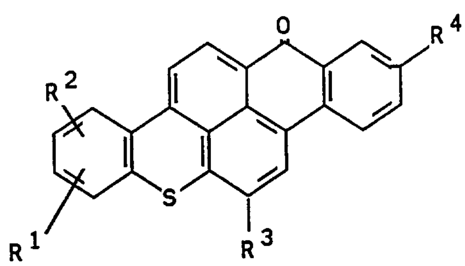

| $R^1$ | $R^2$ | $R^3$ | $R^4$ | Farbton auf PES |
|---|---|---|---|---|
| H | H | H | H | 3 |
| H | H | H | Br | 3 |
| H | H | $iC_3H_7$ | H | 3 |
| $3\text{-}OCH_3$ | H | H | H | 2 |
| $3\text{-}CH_3$ | H | H | H | 3 |
| $3\text{-}CH_3$ | H | H | Br | 3 |
| H | H | H | $SC_6H_5$ | 1 |
| H | H | H | $S(3.5\text{-Di-}CH_3\text{-})C_6H_3$ | 1 |
| H | H | H | $S(4\text{-Cl-})C_6H_4$ | 2 |
| H | H | H | $S(4\text{-Cl-}2.5\text{-Di-}CH_3\text{-})C_6H_2$ | 2 |
| $3\text{-}CH_3$ | H | H | $S(4\text{-Cl-}2.5\text{-Di-}CH_3\text{-})C_6H_2$ | 1 |
| $3\text{-}CH_3$ | H | H | $S(3.5\text{-Di-}CH_3\text{-})C_6H_3$ | 1 |
| H | H | $OCH_3$ | H | 2 |
| H | H | $CH_3$ | H | 3 |
| $2\text{-}CH_3$ | H | $OCH_3$ | H | 2 |
| $2\text{-}CH_3$ | $3\text{-}CH_3$ | H | H | 3 |
| 2-Cl | $4\text{-}CH_3$ | H | H | 3 |
| H | H | H | $OC_6H_5$ | 2 |
| $3\text{-}CH_3$ | H | H | $OC_6H_5$ | 2 |
| H | H | H | $O(3\text{-}CH_3)C_6H_4$ | 2 |
| H | H | H | $OnC_3H_7$ | 2 |
| H | H | H | $OCH_3$ | 2 |
| $3\text{-}CH_3$ | H | H | $OC_2H_5$ | 2 |
| $3\text{-}OCH_3$ | H | H | $OC_6H_5$ | 1 - 2 |
| $2\text{-}CH_3$ | H | H | $OC_6H_5$ | 2 |
| $2\text{-}CH_3$ | $3\text{-}CH_3$ | H | $OnC_4H_9$ | 2 |

## Patentansprüche

1. Mischungen von Farbstoffen der allgemeinen Formel I

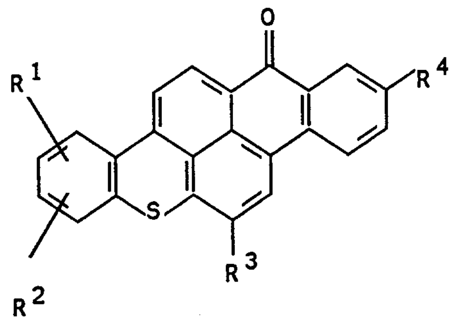

I

worin
$R^1$ Wasserstoff, Halogen, $(C_1-C_4)$-Alkyl oder $(C_1-C_4)$-Alkoxy;
$R^2$ Wasserstoff, Halogen, Cyan, $(C_1-C_4)$-Alkyl, $(C_1-C_4)$-Alkoxy, $(C_1-C_4)$-Alkoxycarbonyl, $(C_1-C_4)$-Alkylcarbonyloxy oder Phenyl, das gegebenenfalls substituiert sein kann;
$R^3$ Wasserstoff, $(C_1-C_4)$-Alkyl, $(C_1-C_4)$-Alkoxy oder Phenyl, das gegebenenfalls substituiert sein kann; und
$R^4$ Wasserstoff, Halogen, $(C_1-C_4)$-Alkoxy, Phenylthio oder Phenoxy, die gegebenenfalls substituiert sein können, bedeuten.

**2.** Mischungen gemäß Anspruch 1, dadurch gekennzeichnet, daß sie einen oder mehrere Farbstoffe der allgemeinen Formel Ia

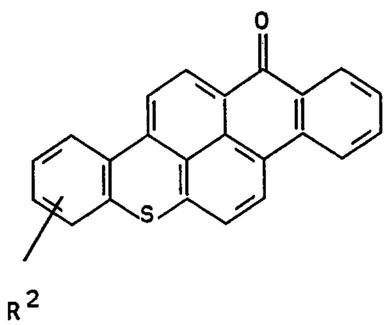

Ia

worin
$R^2$ Halogen, Cyan, $(C_1-C_4)$-Alkyl, $(C_1-C_4)$-Alkoxy oder $(C_1-C_4)$-Alkoxycarbonyl bedeutet;
und/oder der allgemeinen Formel Ib

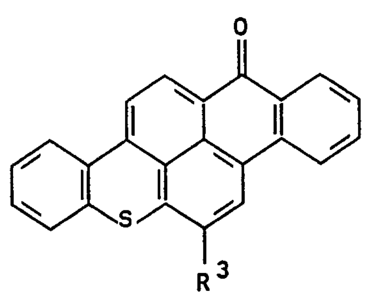

Ib

worin
$R^3$ $(C_1-C_4)$-Alkyl, $(C_1-C_4)$-Alkoxy oder Phenyl bedeutet;
und/oder der allgemeinen Formel Ic

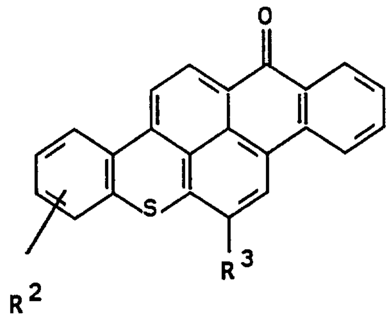

Ic

worin
$R^2$ Halogen, Cyan, $(C_1-C_4)$-Alkyl, $(C_1-C_4)$-Alkoxy oder $(C_1-C_4)$-Alkoxycarbonyl und
$R^3$ $(C_1-C_4)$-Alkoxy
bedeuten;
und/oder der allgemeinen Formel Id

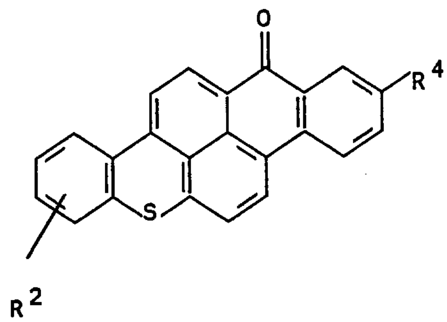

Id

worin
$R^2$ Halogen, Cyan, $(C_1-C_4)$-Alkyl, $(C_1-C_4)$-Alkoxy oder $(C_1-C_4)$-Alkoxycarbonyl und
$R^4$ Halogen, $(C_1-C_4)$-Alkoxy, Phenylthio oder Phenoxy, die gegebenenfalls substituiert sein können, bedeuten, enthalten.

3. Mischungen gemäß Anspruch 1, dadurch gekennzeichnet, daß sie einen oder mehrere Farbstoffe der allgemeinen Formel Ie

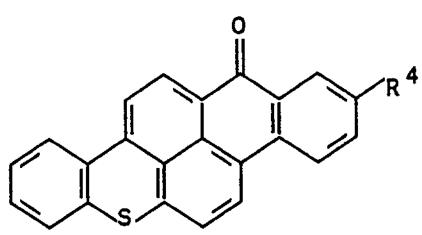

Ie

worin
$R^4$ $(C_1-C_4)$-Alkoxy, Phenylthio oder Phenoxy, die gegebenenfalls substituiert sein können, bedeutet, wobei Phenylthio bevorzugt ist;
und/oder die Verbindung der Formel If

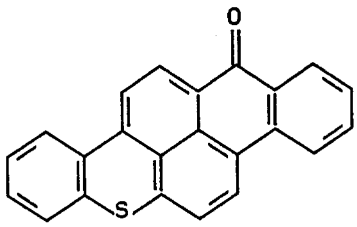

If

enthalten.

**4.** Mischungen gemäß einem oder mehreren der Ansprüche 1 bis 3, dadurch gekennzeichnet, daß sie zwei Mischungskomponenten der allgemeinen Formel I enthalten.

**5.** Verfahren zur Herstellung der Mischungen gemäß einem oder mehreren der Ansprüche 1 bis 4, dadurch gekennzeichnet, daß man
a) die getrennt hergestellten und gegebenenfalls formierten Einzelfarbstoffe der allgemeinen Formel I mischt oder
b) die getrennt hergestellten und formierten Einzelfarbstoffe der allgemeinen Formel I in eine Färbeflotte einrührt oder
c) die getrennt hergestellten Einzelfarbstoffe der allgemeinen Formel I gemeinsam formiert.

**6.** Verfahren zur Herstellung der Mischungen gemäß einem oder mehreren der Ansprüche 1 bis 4, dadurch gekennzeichnet, daß man die Einzelfarbstoffe der allgemeinen Formel I gemeinsam, gegebenenfalls unter Druck in Wasser eine halbe bis mehrere Stunden auf Temperaturen von 50 bis 150°C, vorzugsweise 90 bis 130°C erhitzt und wieder abkühlt und gegebenenfalls die Formierung der Mischung anschließt.

**7.** Verfahren zur Herstellung der Mischungen gemäß einem oder mehreren der Ansprüche 1 bis 4, dadurch gekennzeichnet, daß man die Einzelfarbstoffe der allgemeinen Formel I gemeinsam in einem organischen Lösungsmittel, Lösungsmittelgemisch oder einer Mineralsäure löst, anschließend auskristallisiert und/oder ausfällt, isoliert und gegebenenfalls die Formierung der Mischung anschließt.

**8.** Verfahren zur Herstellung der Mischungen gemäß einem oder mehreren der Ansprüche 1 bis 4, dadurch gekennzeichnet, daß man die Einzelfarbstoffe der allgemeinen Formel I gemeinsam umküpt.

**9.** Verwendung der Mischungen gemäß einem oder mehreren der Ansprüche 1 bis 4 oder der Farbstoffe der allgemeinen Formel I alleine zum Färben und Bedrucken von textilen hydrophoben synthetischen Fasermaterialien und deren Mischungen mit natürlichen Faserstoffen.

**10.** Verwendung gemäß Anspruch 9, dadurch gekennzeichnet, daß Polyester oder polyesterhaltige Textilmaterialien nach dem HT-Färbeverfahren im pH-Bereich von 8 bis 12 gefärbt werden.